# EUROPÄISCHE PATENTANMELDUNG

(11) **EP 1 570 970 A1**
(43) Veröffentlichungstag der Anmeldung: **07.09.2005**
(21) Anmeldenummer: 04005355.5
(22) Anmeldetag: 05.03.2004
(51) Int. Cl.: B29C 45/16, B29C 45/17

(54) **Mehrschicht-Hohlkörper und Verfahren für dessen Herstellung**

(71) Anmelder: A. SCHULMAN GMBH, 50170 Kerpen (DE)
(72) Erfinder: Ollig, Marc, 50937 Köln (DE); Baek, Daniel, 50171 Kerpen (DE); Stier, Thilo, 53859 Niederkassel (DE)
(74) Vertreter: Sternagel, Fleischer, Godemeyer & Partner

(57) **Zusammenfassung**

Die vorliegende Erfindung betrifft ein Verfahren zur Herstellung eines Mehrschicht-Hohlkörpers umfassend das aufeinander folgende Injizieren von mindestens zwei unterschiedlichen Formmassen in eine Form und anschließend Einleitung eines Druckfluides, wobei mindestens eine der verwendeten Formmassen einen gefüllten oder ungefüllten polymeren Hochtemperatur-Werkstoff enthält.

Darüber hinaus betrifft die vorliegende Erfindung einen Mehrschicht-Hohlkörper, welcher durch das erfindungsgemäße Verfahren erhältlich ist.

## Beschreibung

Die vorliegende Erfindung betrifft Mehrschicht-Hohlkörper sowie ein Verfahren für deren Herstellung.

Bei Mehrschicht-Hohlkörpern handelt es sich um eine aus mehreren Schichten gebildete Wandung, die einen oder mehrere miteinander verbundene Hohlräume umschließt. Derartige Hohlkörper werden u.a. als Medienleitung zum Transport unterschiedlichster, meist flüssiger oder gasförmiger Medien verwendet. Sie können beispielsweise als rohrartige Hohlkörper ausgestaltet sein und zusätzlich Anschlüsse und Funktionselemente enthalten.

Zur Herstellung von einschichtigen Hohlkörpern, insbesondere in Form eines Rohres, sind vor allem die Gasinjektions- und die Flüssigkeitsinjektionstechnik bekannt, so beispielsweise aus DE 40 11 310 A1 und DE 199 03 682 A1, sowie die Gasinjektionstechnik mit stark unterkühlten Gasen. Den Verfahren ist gemeinsam, dass eine fließfähige Formmasse in den Formhohlraum eines Spritzgießwerkzeugs entweder so injiziert wird, dass der Hohlraum vollständig oder nur zum Teil ausgefüllt wird. Mittels eines Druckfluides, welches bei der Gasinjektionstechnik (GIT) ein Gas wie Luft, Kohlendioxid oder Stickstoff und bei der Flüssigkeitsinjektionstechnik (FIT) eine Flüssigkeit wie Wasser ("Wasserinjektionstechnik" WIT) oder ein Öl darstellt, wird der noch schmelzflüssige Kern der Formmasse so verdrängt, dass er sich gleichmäßig an der Wandung des Formhohlkörpers verteilt, wobei bei vollständiger Füllung des Hohlraumes mit Formmasse die überschüssige Formmasse beispielsweise durch Öffnungen abgeleitet oder in einer Nebenkavität verteilt wird. Es existieren insbesondere für die Gasinjektionstechnik zahlreiche Verfahrensvarianten und Vorrichtungen. Die DE 199 03 682 A1 erwähnt zwar, dass bei der Wasserinjektionstechnik auch mehrschichtige Hohlkörper durch Injektion unterschiedlicher Formmassen hergestellt werden können, geht jedoch auf verfahrenstechnische Details oder geeignete Materialen nicht weiter ein.

Die beiden genannten Verfahren besitzen aufgrund der jeweiligen Vor- und Nachteile unterschiedliche Einsatzgebiete. Da aufgrund der hohen Viskositätsunterschiede zwischen der zu verdrängenden Schmelze und dem Gas die Verdrängung der Formmasse erschwert ist, führt die Gasinjektionstechnik bevorzugt zu dickwandigen, röhrenförmigen Bauteilen mit kleinerem Durchmesser. Durch Einsatz beispielsweise der Wasserinjektionstechnik sind dagegen auch Bauteile mit geringen Restwanddicken und größerem Durchmesser erhältlich.

Die deutlich größere Wärmekapazität des Wassers im Vergleich zu Gasen trägt ebenfalls dazu bei, dass durch die WIT die Herstellung von Bauteilen mit größerem Durchmesser bei gleichzeitig verringerter Restwanddicke ermöglicht wird. Bei der GIT dagegen führt die Herstellung von Bauteilen mit größerem Durchmesser dazu, dass durch die schlechtere Wärmeableitung die Formmassen relativ langsam abkühlen und daher an der Formwandung hinunterlaufen und dadurch zu Unterschieden der Restwanddicke und Unregelmäßigkeiten im erhaltenen abgekühlten Hohlkörper führen können.

Darüber hinaus ist bei der Herstellung von Bauteilen mit scharfen Krümmungen (z.B. scharfen 90°-Umlenkungen oder 180°-Kurven) zu berücksichtigen, dass diese zu Differenzen bei den Wanddicken im Verlauf des Bauteils führen können. Bei geeigneter Wahl der Einflussparameter wie beispielsweise Wasserdruck, Haltezeit und Temperatur kann bei der WIT eine bessere Zentrizität des Hohlraumes in und nach Krümmungen realisiert werden im Gegensatz dazu ist jedoch im Vergleich zur GIT bei dieser Technik die Entfernung des Druckfluides Wasser aus den gekrümmten Bereichen nach dem Abkühlen der gebildeten Wandung des Hohlkörpers erschwert.

Ein großes Einsatzgebiet der GIT und der WIT stellt die Herstellung von Medienleitungen dar, beispielsweise im Automobilbereich. So werden häufig Kühlwasserschläuche durch derartige Techniken hergestellt. Diese überwiegend rohrförmigen Bauteile weisen vielfach Verzweigungen und relativ scharfe Krümmungen ggf. in verschiedenen räumlichen Ebenen auf, was bei der Herstellung zu den o.g. Problemen führt.

Darüber hinaus sind an die Materialien, die dort zum Einsatz kommen hohe Anforderungen zu stellen. Zum Einen müssen die Materialien dauerhaft stabil im Hinblick auf die sie durchfließenden Substanzen sein. Sie sollten weder übermäßig von den verwendeten durchströmenden Medien angegriffen werden, noch es aufgrund ihrer Beschaffenheit ermöglichen, dass bei einem häufigen Durchfluss Partikel der Oberfläche abgetragen und mit dem durchströmenden Medium mitgerissen werden. Das in diesem Bereich häufig verwendete Wasser/Glykol-Gemisch hat sich dabei als sehr aggressiv erwiesen, so dass üblicherweise eine Stabilisierung der die Wandung bildenden Materialien erforderlich ist, die häufig mit hohem apparativem und hohem Kostenaufwand verbunden ist.

Des weiteren kommt es standardmäßig zu Temperaturschwankungen mit hohen Maximalwerten. Die verwendeten Materialien müssen daher temperaturstabil sein. Zudem sollten die Bauteile eine gewisse mechanische Festigkeit besitzen, um eine konstante Positionierung am Gebrauchsort, beispielsweise im Automobil, gewährleisten zu können.

Für Medienleitungen verwendbare Materialien wie z.B. hitzestabilisiertes Polypropylen bis einschließlich (Ethylen-Propylen-Dien-Terpolymer) (EPDM) zeichnen sich zwar durch eine gute Temperatur- und Medienbeständigkeit, wie u.a. Heißwasserbeständigkeit, aus, sie sind aber nur in begrenztem Masse mechanisch belastbar. Daher wurden für diese Zwecke bisher vorzugsweise Hochtemperatur-Werkstoffe wie Polyamide eingesetzt, die zum Erzielen einer besseren mechanischen Festigkeit beispielsweise mit Glasfasern gefüllt sind.

Daraus hergestellte Bauteile weisen zwar in den erforderlichen Bereichen eine gute Temperaturstabilität auf, erfordern aber häufig eine kostenaufwendige Hydrolysestabilisierung, um die Beständigkeit gegenüber den durchströmenden Medien wie einer Kühlflüssigkeit zu gewährleisten.

Darüber hinaus neigen die Schmelzen der verwendeten Hochtemperatur-Werkstoffe wie Polyamid dazu, schnell zu erstarren, insbesondere beim Einsatz stark kühlender Druckfluide wie Wasser oder gekühlter Inertgase wie Stickstoff oder Kohlendioxid im Verlauf des Herstellungsverfahrens. Durch den schneller erstarrenden, mit dem Druckfluid in Kontakt stehenden, innenliegenden Teil der Formmasse kommt es daher bei Verwendung derartiger Materialien häufig zur Ausbildung von Lunkern in der Wandung, die eine mechanische Schwachstelle bilden können. Das schnelle und daher ungleichmäßige Erstarren der Formmasse führt ebenfalls dazu, dass die Oberfläche ein gewisse Rauheit und damit einen erhöhten Strömungswiderstand aufweist. Bei einem regelmäßigen, zum Teil auch länger andauernden, Durchströmen von entsprechend hergestellten Rohren beispielsweise mit Kühlflüssigkeit kann dies zudem zu einer nicht erwünschten Abtragung der inneren Oberfläche des Rohres und einer Verteilung des Rohrmaterials in andere Bereiche, z. B. eines Automobils, und damit einhergehend zu Schädigungen führen. Dies ist insbesondere der Fall, wenn das die Wandung bildende Material mit Glasfasern gefüllt ist, welche im Laufe der Zeit teilweise ausgewaschen werden.

Um derartige Probleme zu vermeiden zielen die aktuelle Weiterentwicklungen darauf ab, die verwendeten Werkstoffe zu verbessern, beispielsweise durch retardierende Additive und Glasfaser-Mineral-Mischungen . Dies ist jedoch üblicherweise mit einem erhöhten Kostenaufwand, zum Teil auch mit extremem apparativem Aufwand verbunden.

Der vorliegenden Erfindung lag daher die Aufgabe zu Grunde, einen Hohlkörper bereitzustellen, der insbesondere zur Medienleitung geeignet ist, und bei dem die oben erwähnten Nachteile vermieden werden können. Darüber hinaus bestand die Aufgabe darin, ein Verfahren zur Herstellung eines Hohlkörpers bereitzustellen, der insbesondere zur Medienleitung geeignet ist und bei dem die oben aufgeführten Nachteile vermieden werden können.

Die Aufgabe wird gelöst durch ein Verfahren zur Herstellung eines Mehrschicht-Hohlkörpers, bei dem mindestens zwei unterschiedliche Formmassen aufeinander folgend in eine Form injiziert und anschließend ein Druckfluid eingeleitet wird, wobei mindestens eine der verwendeten Formmassen einen gefüllten oder ungefüllten polymeren Hochtemperatur-Werkstoff enthält. Die Aufgabe wird weiterhin gelöst durch einen Mehrschicht-Hohlkörper, der durch das erfindungsgemäße Verfahren erhältlich ist.

Bei den vorliegenden Mehrschicht-Hohlkörpern handelt es sich um eine aus mehreren Schichten gebildete Wandung, die einen oder mehrere miteinander verbundene Hohlräume umschließt. Darüber hinaus können die Hohlkörper weitere Funktionselemente aufweisen wie Dome, Befestigungselemente, Laschen und Einlegeteile. Vorzugsweise handelt es sich bei den vorliegenden Mehrschicht-Hohlkörpern um rohrförmige Bauteile, insbesondere zur Verwendung als Medienleitungen, beispielsweise für den Automobilbereich, wie Kühlwasserschläuche. Darüber hinaus ist deren Verwendung als Ölschläuche, Wasserleitungen, Wasserhochdruckleitungen, Heizölleitungen und im Haushaltsbereich denkbar. Die rohrförmigen Bauteile können eine oder mehrere identische oder unterschiedliche Krümmungen aufweisen, wobei der Krümmungswinkel nicht besonders eingeschränkt ist und die Krümmungen in denselben oder unterschiedlichen räumlichen Ebenen auftreten können. Beispielsweise sind auch 90°-Umlenkungen oder 180°-Kurven möglich. Die Rohre können zudem Verzweigungen aufweisen.

Die Art des Mediums, das beispielsweise Medienleitungen als Hohlkörper durchströmt, ist nicht besonders eingeschränkt, sollte das mit ihm in Kontakt tretende Wandungsmaterial jedoch nicht übermäßig angreifen. Bei Kühlwasserschläuchen als Medienleitung kann beispielsweise ein Wasser/Glykol-Gemisch die mehrschichtige Medienleitung durchströmen. Darüber hinaus stellen Öl, Wasser einschließlich Abwasser, (verdünnte) Reinigungsmittel und Laugen übliche Medien dar, die derartige Leitungen durchströmen.

Derartige mehrschichtige Hohlkörper sind erhältlich durch Spritzgießverfahren, welche zur Ausbildung des Hohlraumes ein Druckfluid verwenden. Vorzugsweise handelt es sich dabei um eine Gasinjektionstechnik, teilweise mit stark unterkühlten Gasen, eine Flüssigkeitsinjektions- oder insbesondere eine Wasserinjektionstechnik wie sie nach dem Stand der Technik bekannt sind. Dabei werden nacheinander zwei oder mehrere fließfähige unterschiedliche Formmassen in eine, der Form des auszubildenden Hohlkörpers entsprechende, Form injiziert (vorzugsweise durch dieselbe Anspritzstelle) und anschließend das Druckfluid eingeleitet. Je nach Verwendungszweck des Hohlkörpers kann das Druckfluid nach dem Abkühlen der Formmassen im Hohlkörper verbleiben oder aus diesem entfernt werden. Zur Herstellung von Medienleitungen, die mindestens zwei offene Enden aufweisen, kann das Druckfluid beim Ausbilden der Enden entfernt werden. Bei der Verwendung von Flüssigkeiten als Druckfluid ist zusätzlich ein sich anschließender Trocknungsschritt möglich, beispielsweise mittels eines durchströmenden Gases oder Luft.

Eine weitere Variante ist die vorherige Einleitung von Gas oder Luft zur Ausbildung des Hohlraumes und anschließende Durchspülung mit Wasser.

Bei der Herstellung der vorliegenden Mehrschicht-Hohlkörper wird dabei mindestens eine Formmasse verwendet, die einen gefüllten oder ungefüllten polymeren Hochtemperatur-Werkstoff enthält

Unter Hochtemperatur-Werkstoff ist in der vorliegenden Anmeldung ein Werkstoff zu verstehen, der bei Betriebstemperaturen von -80°C bis +330°C, bevorzugt von -50°C Bis +300°C und besonders bevorzugt von -40°C bis +250°C weitestgehend formbeständig ist. Darüber hinaus neigen die hierin vorzugsweise verwendeten geschmolzenen Hochtemperatur-Werkstoffe dazu, schnell zu erstarren.

Der Vorteil bei der Herstellung von mehrschichtigen Hohlkörpern, bei denen mindestens eine Schicht einen derartigen polymeren Hochtemperatur-Werkstoff enthält, besteht insbesondere darin, dass die Kühlung des Hochtemperatur-Werkstoffs nicht ausschließlich über das Druckfluid erfolgt, sondern die noch fließfähige, den Werkstoff enthaltende, Formmasse mit einer weiteren geschmolzenen oder bereits leicht abgekühlten Formmasse in Kontakt steht. Dadurch ist die Temperaturdifferenz zwischen dem äußeren und dem inneren Bereich einer Schicht geringer und der innere Bereich einer Schicht kühlt nicht drastisch schneller ab im Vergleich zum äußeren Bereich der Schicht. Das Abkühlen erfolgt daher über einen großen Bereich der Schichtdicke wesentlich gleichmäßiger. Dadurch wird sowohl die Lunker-Bildung reduziert als auch die Rauheit der inneren Oberfläche vermindert. Das Mitreißen von kleinen Partikeln aus der inneren Oberfläche des Hohlkörpers, wenn dieser beim Gebrauch von flüssigen Medien durchströmt wird, ist dadurch gleichzeitig vermindert.

Unabhängig von der Art der neben der den Hochtemperatur-Werkstoff enthaltenden Formmasse verwendeten weiteren Formmasse(n) werden daher allein durch die Durchführung des Verfahrens zur Herstellung mehrschichtiger Hohlkörper im Vergleich zu einschichtigen Hohlkörpern die Eigenschaften der erhaltenen Hohlkörper im Hinblick auf durch Lunker hervorgerufene Schwachstellen und/oder die Oberflächenrauheit verbessert. Der Effekt ist besonders deutlich bei Anwendung der Flüssigkeits- bzw. insbesondere der Wasserinjektionstechnik, tritt aber auch bei der Gasinnendrucktechnik mit stark unterkühlten Gasen auf.

Dieser Effekt wird noch verstärkt, wenn als innere Formmasse ein Material verwendet wird, welches deutlich langsamer erstarrt als der geschmolzene Hochtemperatur-Werkstoff. Dadurch wird eine besonders gleichmäßige Abkühlung von Außenschicht(en) und Innenschicht erzielt und damit eine besonders glatte Innenoberfläche.

Zur Herstellung des mehrschichtigen Hohlkörpers werden mindestens zwei unterschiedliche Formmassen verwendet. Der Unterschied ergibt sich dabei beispielsweise aus der Verwendung eines gänzlich anderen Inhaltsstoffes in einer der Formmassen oder durch Verwendung des gleichen Inhaltsstoffes, der auf spezielle Weise hergestellt oder verarbeitet wird oder andere Zusätze oder die gleichen Zusätze in unterschiedlichen Mengen enthält, so dass die aus den Formmassen gebildeten Schichten unterschiedliche Eigenschaften aufweisen. So ist beispielsweise denkbar, dass derselbe Inhaltsstoff lediglich eine andere Modifikation aufweist oder mit einem anderen Füllstoff gefüllt ist bzw. denselben Füllstoff in einer anderen Menge enthält.

Die Anzahl der verwendeten unterschiedlichen Formmassen bestimmt sich durch die Anforderungen an den Hohlkörper. Hohlkörper, die bevorzugt eine relativ kleine Restwanddicke und/oder einen kleinen Querschnitt aufweisen sollen, bestehen daher üblicherweise aus weniger Schichten als Hohlkörper mit größerem Durchmesser und/oder größeren Restwanddicken. Darüber hinaus bestimmt sich die Anzahl und Art der verwendeten Formmassen durch die gewünschten Eigenschaften des Hohlkörpers. So sind beispielsweise Außenschichten oder Innenschichten, die eine Versiegelung zum Schutz vor Substanzen, mit denen der Hohlkörper in Kontakt tritt, darstellen sollen, denkbar. Vorzugsweise umfasst der Mehrschicht-Hohlkörper zwei, drei oder vier, besonders bevorzugt zwei Schichten.

Mindestens eine der Formmassen enthält einen gefüllten oder ungefüllten polymeren Hochtemperatur-Werkstoff.

Neben dem gefüllten oder ungefüllten polymeren Hochtemperatur-Werkstoff enthält die Formmasse optional bis zu 70 Gew.%, vorzugsweise bis zu 50 Gew.% weitere gängige Bestandteile wie Füllstoffe, Stabilisatoren, Farbstoffe, Pigmente und Gleitmittel.

Bei dem Hochtemperatur-Werkstoff handelt es sich bevorzugt um ein Polymer, welches ausgewählt wird aus der Gruppe umfassend Polyamide (PA), Polyalkylenterephthalate, gefüllte Polyolefine oder deren Mischungen, wobei das Polyolefin in der Mischung auch ungefüllt sein kann. Vorzugsweise finden gefüllte oder ungefüllte Polyamide, gefüllte oder ungefüllte Polyalkylenterephthalate, gefüllte Polyolefine oder deren Mischungen, vorzugsweise Mischungen der gefüllten oder ungefüllten Polyamide mit ungefüllten Polyolefinen Verwendung.

Die Polyamide können zudem aromatische Reste enthalten. Bespiele für bevorzugt verwendete Poylamide stellen PA 6, PA 66, PA 4.6, PA 12, Polyphthalamid (PPA) oder deren Mischungen dar.

Als Polyalkylenterephthalat kommen vorzugsweise Polyethylenterephthalat (PET), Polybutylentherephthalat (PBT), Poly(1,1-Cyclohexandimethylenterephthalat) oder deren Mischungen zur Anwendung. Besonders bevorzugt ist die Verwendung von PBT.

Das Polyolefin kann beispielsweise ausgewählt werden aus der Gruppe umfassend Polyethylen (PE), Polypropylen (PP) und deren Mischungen. Besonders bevorzugt kommt Polypropylen zum Einsatz. Wenn das Polyolefin, insbesondere das Polypropylen, nicht in Kombination mit einem weiteren der genannten Hochtemperatur-Werkstoffe verwendet wird, sondern in der Formmasse das einzige Polymer darstellt, so ist es gefüllt, um eine bessere mechanische Festigkeit, Temperaturstabilität und Formbeständigkeit zu gewährleisten.

Der Hochtemperatur-Werkstoff kann mit einem oder mehreren Füllstoffen gefüllt sein. Der oder die Füllstoffe werden vorzugsweise ausgewählt aus der Gruppe umfassend Glasfasern, Mineralfasern und Mineralien. Als Glasfasern können beispielsweise die aus dem Stand der Technik bekannten E- oder S-Glasfasern verwendet werden. Ein Bespiel für eine geeignete Mineralfaser stellt Wollastonit dar. Als verwendbare Mineralien sind beispielsweise Calciumcarbonat, z. B. in Form von Kreide, Bariumsulfat, Glimmer, Talkum oder Kaolin zu nennen. Vorzugsweise werden Glasfasern verwendet.

Der Füllstoffgehalt liegt vorzugsweise im Bereich von 0 bis 85 Gew.% bezogen auf das gefüllte Polymer, besonders bevorzugt im Bereich von 10 bis 50 Gew.% und ganz besonders bevorzugt im Bereich von 20 bis 40 Gew.%. Der Glasfasergehalt beträgt ebenfalls vorzugsweise zwischen 0 bis 60 Gew.% bezogen auf das gefüllte Polymer, besonders bevorzugt 10 bis 50 Gew.% und ganz besonders bevorzugt 20 bis 40 Gew.%.

Bei einer besonders bevorzugten Ausführungsform wird eine Mischung aus mit Glasfasern gefülltem PA, insbesondere PA66 oder PA6, und PP verwendet. Der Gehalt an PP beträgt dabei vorzugsweise 0 bis 80 Gew.% bezogen auf die Gesamtmenge an PA und PP, besonders bevorzugt 30 bis 70 Gew.% und ganz besonders bevorzugt 40 bis 50 Gew.% PP. Der Glasfasergehalt liegt in den zuvor genannten Bereichen.

Eine besonders vorteilhafte Ausführungsform enthält eine Mischung aus PA66 und PP (PP-Gehalt in den zuvor genannten Breichen) mit 30-45 Gew.%, insbesondere 35 Gew.% Glasfasern als Außenschicht und PP mit 15-25 Gew.%, insbesondere 20 Gew.% Glasfasern als Innenschicht.

Es ist besonders vorteilhaft, wenn eine einen Hochtemperatur-Werkstoff enthaltende Schicht nicht die Innenschicht des hergestellten Mehrschicht-Hohlkörpers ausbildet. In diesem Fall wird vermieden, dass die Hochtemperatur-Werkstoffe direkt mit einem beispielsweise einen röhrenförmigen Hohlkörper durchströmenden Medium in Kontakt treten. Dies ist besonders dann von Bedeutung, wenn der verwendete Hochtemperatur-Werkstoff per se nicht gegenüber dem durchströmenden Medium stabil ist. In diesem Fall wäre eine Stabilisierung des die Innenschicht bildenden Hochtemperatur-Werkstoffs sinnvoll bzw. erforderlich. Diese kann jedoch mit hohem apparativem oder Kostenaufwand verbunden sein. Wenn dagegen als Innenschicht ein Material gewählt wird, das per se stabil gegenüber dem durchströmenden Medium ist, entfällt das Erfordernis, die Innenschicht zu stabilisieren.

So ist z. B. bei Verwendung des Mehrschicht-Hohlkörpers als Kühlwasserschlauch im Automobilbereich zu berücksichtigen, dass als Hochtemperatur-Werkstoff zum Einsatz kommende gefüllte oder ungefüllte Polyamide nicht stabil sind gegenüber einem Wasser/Glykol-Gemisch. Sollte die Innenschicht aus einem derartigen Material bestehen, sollte das Polyamid hydrolysestabilisert werden, um eine längere Lebensdauer des Schlauches zu gewährleisten.

Die Formmasse, die nicht die Innenschicht ausbildet, kann auch ein rezykliertes Polymer enthalten. Da die das rezyklierte Polymer enthaltende Schicht in diesem Fall nicht direkt mit einem den Hohlkörper durchströmenden Medium in Kontakt tritt, hat die Rezyklatqualität keinen Einfluss auf die Beständigkeit des Mehrschicht-Hohlkörpers gegenüber dem durchströmenden Medium.

Bei einer weiteren bevorzugten Ausführungsform wird der Mehrschicht-Hohlkörper aus zwei oder mehr Formmassen gebildet, von denen mindestens zwei benachbarte das gleiche gefüllte Polymer oder das gleiche Gemisch von Polymeren, von denen mindestens eines gefüllt ist, enthalten, aber mit unterschiedlichem Füllstoffgehalt. Dadurch ist die Haftung zwischen den beiden Schichten deutlich verstärkt im Vergleich zur Verwendung vollständig unterschiedlicher Polymere in den Formmassen. Es ist dabei sowohl möglich, dass die innere Schicht einen höheren Füllstoffgehalt aufweist als auch, dass die äußere Schicht einen höheren Füllstoffgehalt aufweist. Die Differenz der unterschiedlichen Füllstoffgehalte ist dabei nicht besonders eingeschränkt, sie sollte jedoch bevorzugt mindestens 5 Gew.%, besonders bevorzugt mindestens 15 Gew% und ganz besonders bevorzugt mindestens 30 Gew.% betragen. In einer besonders vorteilhaften Ausführungsform weist die äußere Schicht den höheren Füllstoffgehalt auf.

In einer weiteren vorteilhaften Ausführungsform wird der Mehrschicht-Hohlkörper aus zwei oder mehr Formmassen gebildet, von denen mindestens zwei benachbarte das gleiche gefüllte Polymer oder das gleiche Gemisch von Polymeren, von denen mindestens eines gefüllt ist, mit demselben Füllstoffgehalt aber unterschiedlicher Füllstoffart enthalten. Aufgrund der Verwendung des gleichen Polymers in mindestens zwei benachbarten Schichten tritt eine verstärkte Bindung zwischen diesen Schichten auf im Vergleich zu benachbarten Schichten, die aus völlig unterschiedlichen Polymeren gebildet werden.

Weitere Polymere, die neben den polymeren Hochtemperatur-Werkstoffen eine oder mehrere Schichten des Mehrschicht-Hohlkörpers ausbilden können, stellen beispielsweise Polyacetale, ungefüllte Polyolefine oder deren Mischungen dar. Bei dem eingesetzten Polyolefin handelt es sich vorzugsweise um Polyethylen, Polypropylen oder deren Mischungen. Als Polyacetal kann vorteilhafterweise Poly(oxymethylen) zum Einsatz kommen.

In einer besonders vorteilhaften Ausführungsform wird die Innenschicht des Mehrschicht-Hohlkörpers aus einem dieser Polymere gebildet. Dabei findet insbesondere Polypropylen Verwendung. Speziell wenn der Mehrschicht-Hohlkörper als Kühlwasserschlauch im Automobilbereich zur Anwendung kommen soll, zeichnet sich Polypropylen als Material für die Innenschicht aus, da es stabil gegenüber dem als Kühlflüssigkeit verwendeten Wasser/Glykol-Gemisch ist. In ungefüllter Form ist es jedoch nicht temperaturstabil im Hinblick auf seine Formbeständigkeit. Seine Verwendung als alleinige Außenschicht würde dazu führen, dass diese sich z. B. beim Durchströmen von Medien höherer Temperatur durch den Hohlkörper verformt, was beim Gebrauch unerwünscht ist.

Daher sollte zumindest eine der äußeren Schichten aus einem Hochtemperatur-Werkstoff gebildet sein, um die mechanische Festigkeit des Hohlkörpers zu garantieren. Ein Verformen der Innenschicht ist in diesem Fall weniger problematisch, da die Innenschicht beim Durchströmen eine flüssigen Mediums durch den dadurch erzeugten Druck so weit nach außen gedrückt wird, bis sie an die Wandung des Hohlkörpers als Begrenzung stößt und sich an diese anschmiegt.

Eine gegenüber einem den Hohlkörper durchströmenden Medium stabile Innenschicht besitzt zudem den Vorteil, dass eine ggf. gegenüber diesem Medium nicht stabile Außenschicht, da sie nicht mit dem Medium in Kontakt tritt, nicht stabilisiert werden muss. Dies kann sowohl technischen Aufwand als auch Kosten sparen.

Insbesondere bei Verwendung des Mehrschicht-Hohlkörpers als Kühlwasserschlauch im Automobilbereich stellt daher ungefülltes Polypropylen, neben hydrolysestabiliesiertem gefülltem oder ungefülltem Polyamid das bevorzugte Material zur Ausbildung der Innenschicht dar.

Eine besonders bevorzugte Ausführungsform enthält eine Mischung aus PA, insbesondere PA66 oder PA6, und PP mit 30-45 Gew.%, insbesondere 35 Gew.% Glasfasern als Außenschicht und ungefülltes PP als Innenschicht, wobei der Gehalt an PP in der Außenschicht dabei vorzugsweise 0 bis 80 Gew.% bezogen auf die Gesamtmenge an PA und PP, besonders bevorzugt 30 bis 70 Gew.% und ganz besonders bevorzugt 40 bis 50 Gew.% PP beträgt.

Da die Innenschicht beim Durchströmen eines Mediums nach außen gedrückt wird, ist bei Verwendung eines Hochtemperatur-Werkstoffes in mindestens einer der äußeren Schichten keine hohe Anforderung an die Verbindung zwischen Innenschicht und Außenschicht zu stellen. Es ist jedoch auch nicht nachteilig, wenn zwischen Innenschicht und Außenschicht eine verstärkte Bindung vorliegt.

Als Druckfluid können gasförmige oder flüssige Substanzen verwendet werden, insbesondere solche wie sie aus dem Stand der Technik für derartige Verfahren bekannt sind. Dazu zählen beispielsweise Luft, inertgase wie Stickstoff oder Kohlendioxid oder flüssige Medien wie Wasser oder Öle oder Mischungen daraus. Es ist ebenfalls möglich, dass insbesondere die flüssigen Druckfluide weitere Substanzen enthalten, die die Ausbildung des Hohlkörpers erleichtern oder dessen Eigenschaften, insbesondere dessen Oberflächeneigenschaften, verbessern. Vorzugsweise wird ein flüssiges Druckfluid, besonders bevorzugt Wasser verwendet.

### Beispiele

Bevorzugte Ausführungsformen werden nachfolgend anhand von Beispielen verdeutlicht, ohne dass der Schutzbereich auf diese Beispiele eingeschränkt sein soll. Wenn nicht anders angegeben beziehen sich Prozentangaben nachfolgend auf Gewichtsprozent.

### Vergleichsbeispiel

Ein Kühlwasserrohr wird aus einem hydrolysestabilisierten, zu 35 Gew.% bezogen auf das gefüllte Polymer mit Glasfasern gefüllten Polyamid 66 mittels der Wasserinjektionstechnik hergestellt. Es zeigt sich, dass durch die stark kühlende Wirkung des Druckfluides in der Wandung Lunker entstehen, die eine mechanische Schwachstelle bilden. Die innere Oberfläche weist eine leicht raue Oberfläche auf. Durch das ständige Durchströmen des Mediums (Wasser/Glykol im Verhältnis 50/50 w/w) ist mit zunehmender Zeit das Mitreißen von kleinen Partikeln zu beobachten, welche ausgefiltert werden müssen, um Schädigungen zu vermeiden.

### Beispiele gemäß der Erfindung

Analog zum Vergleichsbeispiel wird ein Kühlwasserrohr aus mehreren Schichten gemäß Tabelle 1 im Wasserinjektionsverfahren hergestellt. Die Außenschicht bildet im Coinjektionsverfahren die erste einzuspritzende Komponente. Die innere Schicht wird als zweite Komponente durch die gleiche Anspritzstelle eingespritzt. Der Hohlraum entsteht durch das Ausblasen des noch schmelzflüssigen Kerns mit dem Druckfluid Wasser. Die Qualität der inneren Oberfläche wird visuell und haptisch bestimmt.

**Tabelle 1**

| | Erste Schicht (Außenschicht) | Zweite Schicht (Innenschicht) |
|---|---|---|
| 1 | PA 6 / PP (60/40 w/w) (35 % Glasfasern) | PP |
| 2 | PA 66 / PP (60/40 w/w) (35 % Glasfasern) | PP |
| 3 | PA 66 / PP (60/40 w/w) (35 % Glasfasern) | PP (20 % Glasfasern) |
| 4 | PA 66 (35 % Glasfasern) | PA 66 (hydrolysestabilisiert, ungefüllt) |
| 5 | PA 66 (35 % Glasfasern, Rezyklatqualität) | PA 66 (hydrolysestabilisiert, ungefüllt) |
| 6 | PA 4.6 (35 % Glasfasern) | PP |
| PA=Polyamid, PP=Polypropylen | | |

In allen Fällen wurde auf der inneren Oberfläche eine hohe glatte Qualität erreicht. Nach längerem Gebrauch (> 5000 h) konnte keine Freisetzung von Partikeln aus der Oberfläche des Kühlwasserrohres nachgewiesen werden. Eine Ausbildung Lunkern war nicht zu beobachten. Aus Beispiel 4 ist ersichtlich, dass die Rezyklatqualität der Außenschicht keinen Einfluss auf die Beständigkeit des Mehrschicht-Hohlkörpers gegen das durchströmende Medium besitzt. In allen Fällen waren nach mehr als 5000 stündigem Durchströmen des Kühlrohres mit Wasser/Glykol (50/50 w/w) keine abgelösten Partikel der inneren Oberfläche zu beobachten.

## Patentansprüche

1. Verfahren zur Herstellung eines Mehrschicht-Hohlkörpers umfassend das aufeinander folgende Injizieren von mindestens zwei unterschiedlichen Formmassen in eine Form und anschließend Einleitung eines Druckfluides, wobei mindestens eine der verwendeten Formmassen einen gefüllten oder ungefüllten polymeren Hochtemperatur-Werkstoff enthält.

2. Verfahren nach Anspruch 1, **dadurch gekennzeichnet, dass** der Hochtemperatur-Werkstoff ausgewählt wird aus der Gruppe umfassend Polyamide (PA), Polyalkylenterephthalate, gefüllte Polyolefine oder deren Mischungen, wobei das Polyolefin in der Mischung auch ungefüllt sein kann.

3. Verfahren nach Anspruch 2, **dadurch gekennzeichnet, dass** das Polyamid aromatische Reste enthält.

4. Verfahren nach den Ansprüchen 2 oder 3, **dadurch gekennzeichnet, dass** das Polyamid ausgewählt wird aus der Gruppe umfassend PA 6, PA 66, PA 4.6, PA 12, Polyphthalamid (PPA) oder deren Mischungen.

5. Verfahren nach Anspruch 2, **dadurch gekennzeichnet, dass** das Polyalkylenterephthalat ausgewählt ist aus der Gruppe umfassend Polyethylenterephthalat (PET), Polybutylentherephthalat (PBT), Poly(1,1-Cyclohexandimethylenterephthalat) oder deren Mischungen.

6. Verfahren nach Anspruch 2, **dadurch gekennzeichnet, dass** das Polyolefin ausgewählt wird aus der Gruppe umfassend Polyethylen (PE), Polypropylen (PP) und deren Mischungen.

7. Verfahren nach den Ansprüchen 1 bis 6, **dadurch gekennzeichnet, dass** als polymerer Hochtemperatur-Werkstoff eine Mischung aus gefülltem PA und PP verwendet wird.

8. Verfahren nach den Ansprüchen 1 bis 7, **dadurch gekennzeichnet, dass** der Hochtemperatur-Werkstoff gefüllt ist mit einem oder mehreren Füllstoffen ausgewählt aus der Gruppe umfassend Glasfasern, Mineralfasern und Mineralien.

9. Verfahren nach den Ansprüchen 1 bis 8, **dadurch gekennzeichnet, dass** der Füllstoffgehalt 0 bis 60 Gew.% bezogen auf das gefüllte Polymer beträgt.

10. Verfahren nach den Ansprüchen 1 bis 9, **dadurch gekennzeichnet, dass** der Mehrschicht-Hohlkörper aus zwei oder mehr Formmassen gebildet wird, von denen mindestens zwei benachbarte das gleiche gefüllte Polymer oder das gleiche Gemisch von Polymeren, von denen mindestens eines gefüllt ist, enthalten, aber mit unterschiedlichem Füllstoffgehalt.

11. Verfahren nach den Ansprüchen 1 bis 9, **dadurch gekennzeichnet, dass** der Mehrschicht-Hohlkörper aus zwei oder mehr Formmassen gebildet wird, von denen mindestens zwei benachbarte das gleiche gefüllte Polymer oder das gleiche Gemisch von Polymeren, von denen mindestens eines gefüllt ist, mit demselben Füllstoffgehalt aber unterschiedlicher Füllstoffart enthalten.

12. Verfahren nach den Ansprüchen 1 bis 11, **dadurch gekennzeichnet, dass** eine einen Hochtemperatur-Werkstoff enthaltende Formmasse nicht die Innenschicht des Hohlkörpers ausbildet.

13. Verfahren nach den Ansprüchen 1 bis 12, **dadurch gekennzeichnet, dass** zusätzlich mindestens eine der verwendeten Formmassen ein Polymer ausgewählt aus Polyacetalen, ungefüllten Polyolefinen oder deren Mischungen enthält.

14. Verfahren nach Anspruch 13, **dadurch gekennzeichnet, dass** das ungefüllte Polyolefin ausgewählt wird aus der Gruppe umfassend Polyethylen, Polypropylen oder deren Mischungen.

15. Verfahren nach Anspruch 13, **dadurch gekennzeichnet, dass** als Polyacetal Poly(oxymethylen) verwendet wird.

16. Verfahren nach Anspruch 13, **dadurch gekennzeichnet, dass** Polypropylen die Innenschicht ausbildet.

17. Verfahren nach den Ansprüchen 1 bis 16, **dadurch gekennzeichnet, dass** der Mehrschicht-Hohlkörper aus mindestens zwei verschiedenen Formmassen gebildet wird und die polymeren Bestandteile der Außenschicht-Formmasse 5 bis 95 Gew.% der polymeren Bestandteile der daran angrenzenden Innenschicht-Formmasse und 95 bis 5 Gew.% Füllstoffe enthalten.

18. Verfahren nach den Ansprüchen 1 bis 17, **dadurch gekennzeichnet, dass** die Formmasse, die nicht die Innenschicht bildet, ein rezykliertes Polymer enthält.

19. Verfahren nach den Ansprüchen 1 bis 18, **dadurch gekennzeichnet, dass** das verwendete Druckfluid flüssig oder gasförmig ist.

20. Verfahren nach den Ansprüchen 1 bis 19, **dadurch gekennzeichnet, dass** das verwendete Druckfluid ein Inertgas ist.

21. Verfahren nach den Ansprüchen 1 bis 20, **dadurch gekennzeichnet, dass** das verwendete Druckfluid ausgewählt ist aus der Gruppe umfassend Luft, N₂, CO₂, Wasser und Öl.

22. Mehrschicht-Hohlkörper erhältlich durch das Verfahren nach den Ansprüchen 1 bis 21.

## Geänderte Patentansprüche

### Geänderte Patentansprüche gemäss Regel 86(2) EPÜ.

**1.** Verfahren zur Herstellung eines Mehrschicht-Hohlkörpers umfassend das aufeinander folgende Injizieren von mindestens zwei unterschiedlichen Formmassen in eine Form und anschließend Einleitung eines flüssigen Druckfluides, wobei mindestens eine der verwendeten Formmassen einen gefüllten oder ungefüllten polymeren Hochtemperatur-Werkstoff enthält.

**2.** Verfahren nach Anspruch 1, **dadurch gekennzeichnet, dass** der Hochtemperatur-Werkstoff ausgewählt wird aus der Gruppe umfassend Polyamide (PA), Polyalkylenterephthalate, gefüllte Polyolefine oder deren Mischungen, wobei das Polyolefin in der Mischung auch ungefüllt sein kann.

**3.** Verfahren nach Anspruch 2, **dadurch gekennzeichnet, dass** das Polyamid aromatische Reste enthält.

**4.** Verfahren nach den Ansprüchen 2 oder 3, **dadurch gekennzeichnet, dass** das Polyamid ausgewählt wird aus der Gruppe umfassend PA 6, PA 66, PA 4.6, PA 12, Polyphthalamid (PPA) oder deren Mischungen.

**5.** Verfahren nach Anspruch 2, **dadurch gekennzeichnet, dass** das Polyalkylenterephthalat ausgewählt ist aus der Gruppe umfassend Polyethylenterephthalat (PET), Polybutylentherephthalat (PBT), Poly(1,1-Cyclohexandimethylenterephthalat) oder deren Mischungen.

**6.** Verfahren nach Anspruch 2, **dadurch gekennzeichnet, dass** das Polyolefin ausgewählt wird aus der Gruppe umfassend Polyethylen (PE), Polypropylen (PP) und deren Mischungen.

**7.** Verfahren nach den Ansprüchen 1 bis 6, **dadurch gekennzeichnet, dass** als polymerer Hochtemperatur-Werkstoff eine Mischung aus gefülltem PA und PP verwendet wird.

**8.** Verfahren nach den Ansprüchen 1 bis 7, **dadurch gekennzeichnet, dass** der Hochtemperatur-Werkstoff gefüllt ist mit einem oder mehreren Füllstoffen ausgewählt aus der Gruppe umfassend Glasfasern, Mineralfasern und Mineralien.

**9.** Verfahren nach den Ansprüchen 1 bis 8, **dadurch gekennzeichnet, dass** der Füllstoffgehalt 0 bis 60 Gew.% bezogen auf das gefüllte Polymer beträgt.

**10.** Verfahren nach den Ansprüchen 1 bis 9, **dadurch gekennzeichnet, dass** der Mehrschicht-Hohlkörper aus zwei oder mehr Formmassen gebildet wird, von denen mindestens zwei benachbarte das gleiche gefüllte Polymer oder das gleiche Gemisch von Polymeren, von denen mindestens eines gefüllt ist, enthalten, aber mit unterschiedlichem Füllstoffgehalt.

**11.** Verfahren nach den Ansprüchen 1 bis 9, **dadurch gekennzeichnet, dass** der Mehrschicht-Hohlkörper aus zwei oder mehr Formmassen gebildet wird, von denen mindestens zwei benachbarte das gleiche gefüllte Polymer oder das gleiche Gemisch von Polymeren, von denen mindestens eines gefüllt ist, mit demselben Füllstoffgehalt aber unterschiedlicher Füllstoffart enthalten.

**12.** Verfahren nach den Ansprüchen 1 bis 11, **dadurch gekennzeichnet, dass** eine einen Hochtemperatur-Werkstoff enthaltende Formmasse nicht die Innenschicht des Hohlkörpers ausbildet.

**13.** Verfahren nach den Ansprüchen 1 bis 12, **dadurch gekennzeichnet, dass** zusätzlich mindestens eine der verwendeten Formmassen ein Polymer ausgewählt aus Polyacetalen, ungefüllten Polyolefinen oder deren Mischungen enthält.

**14.** Verfahren nach Anspruch 13, **dadurch gekennzeichnet, dass** das ungefüllte Polyolefin ausgewählt wird aus der Gruppe umfassend Polyethylen, Polypropylen oder deren Mischungen.

**15.** Verfahren nach Anspruch 13, **dadurch gekennzeichnet, dass** als Polyacetal Poly(oxymethylen) verwendet wird.

**16.** Verfahren nach Anspruch 13, **dadurch gekennzeichnet, dass** Polypropylen die Innenschicht ausbildet.

**17.** Verfahren nach den Ansprüchen 1 bis 16, **dadurch gekennzeichnet, dass** der Mehrschicht-Hohlkörper aus mindestens zwei verschiedenen Formmassen gebildet wird und die polymeren Bestandteile der Außenschicht-Formmasse 5 bis 95 Gew.% der polymeren Bestandteile der daran angrenzenden Innenschicht-Formmasse und 95 bis 5 Gew.% Füllstoffe enthalten.

**18.** Verfahren nach den Ansprüchen 1 bis 17, **dadurch gekennzeichnet, dass** die Formmasse, die nicht die Innenschicht bildet, ein rezykliertes Polymer enthält.

**19.** Verfahren nach den Ansprüchen 1 bis 18, **dadurch gekennzeichnet, dass** das verwendete Druckfluid ein Inertgas ist.

**20.** Verfahren nach den Ansprüchen 1 bis 19, **dadurch gekennzeichnet, dass** das verwendete Druckfluid ausgewählt ist aus der Gruppe umfassend Wasser und Öl.

**21.** Mehrschicht-Hohlkörper erhältlich durch das Verfahren nach den Ansprüchen 1 bis 20.
